# EUROPEAN PATENT APPLICATION

(11) **EP 4 345 291 A1**
(43) Date of publication of application: **03.04.2024**
(21) Application number: 22382885.6
(22) Date of filing: 27.09.2022
(51) Int. Cl.: F03D 13/10, B66C 23/20, B66C 23/32, E04H 12/34

(54) **METHOD OF ASSEMBLING A WIND TURBINE AND WIND TURBINE ASSEMBLY SYSTEM, AND METHOD OF ASSEMBLING A WIND FARM AND WIND FARM ASSEMBLY SYSTEM**

(71) Applicant: Nordex Energy SE & Co. KG, 22419 Hamburg (DE); Nordex Energy Spain, S.A.U., 31395 Barasoain (Navarra) (ES)
(72) Inventor: GARCÍA MAESTRE, Iván, BARASOAIN (NAVARRA) (ES); MALICHEWSKI, Mathias, HAMBURG (DE); CALDERÓN, Iñigo, BARASOAIN (NAVARRA) (ES); ALVAREZ YOLDI, Javier, BARASOAIN (NAVARRA) (ES); SOLLA FREIJOMIL, Eugenio Luis, BARASOAIN (NAVARRA) (ES); BLANCO DIEGUEZ, Jose Luis, BARASOAIN (NAVARRA) (ES); ÁLVARO GUTIÉRREZ, Pablo, MADRID (ES); CARRILLO ALONSO, Luis, MADRID (ES); BIEDMA GARCÍA, Manuel, MADRID (ES); RUPPEN CAÑÁS, Francisco José, PONTEVEDRA (ES)
(74) Representative: Pons Ariño, Angel

(57) **Abstract**

The present invention can be included in the technical field of wind turbine assembly systems and discloses a method of assembling a wind turbine of the present invention proposes an alternative to conventional cranes having a first lifting structure configured to withstand the load of at least one tower section or at least one wind turbine component, and at least one second lifting structure configured to perform the lifting of the first lifting structure with respect to the wind turbine tower. Additional objects of the invention are also a wind turbine assembly system and a method of assembling a wind farm.

## Description

### OBJECT OF THE INVENTION

The present invention can be included in the technical field of wind turbine assembly systems.

The method of assembling a wind turbine of the present invention proposes an alternative to conventional cranes having a first lifting structure configured to withstand the load of at least one tower section or at least one wind turbine component, and at least one second lifting structure configured to perform the lifting of the first lifting structure with respect to the wind turbine tower.

Additional objects of the invention are also a wind turbine assembly system and a method of assembling a wind farm.

### BACKGROUND OF THE INVENTION

The increase in the rated power of wind turbines entails the increase in weights and dimensions of all the turbine components in general, but the following aspects are of special relevance for the assembly costs:
- The height of the tower;
- Diameter of the rotor and weight of the blades-hub unit;
- Weight of the nacelle and subcomponents;
- Weight of the tower sections.

Of the above, the most relevant is the height of the tower, existing already designs of 120 m and more, especially for the assembly of relatively voluminous and heavy components such as the aforementioned: the large overturning moments associated to the increase in height make it necessary to have a high-capacity crane. Usually, conventional cranes supported on the ground like mobile crawler cranes are used and tower cranes -which have been introduced recently as an alternative to the previously mentioned ones- are used for the erection of wind turbines.

Mobile crawler cranes have been the standard solution for the installation of the latest generation of turbines, with a tower height in a range up to 120m. This type of crane can be moved fully assembled between positions under certain assumptions (such as a very low road longitudinal slope and minimum road width of more than 6m). However, if the crane has to be dismantled, a substantial area for the boom assembly and disassembly process will be needed.

Tower cranes provide safe erection of wind turbines with hub heights of 110m or more in low-wind areas. Wind turbines can therefore be erected with wind speeds of up to 18m/s. However, there is a lack of experience of the operators with these new set of cranes and low offer worldwide, as well as uncertainty on the actual installation rates due to insufficient track record; Also, real installation costs are still unknown.

Both solutions, mobile crawler cranes and tower cranes, are limited to heights above 120m not being possible to carry out the assembly of wind turbines up to 180m.

The high costs and the described drawbacks justify the search for alternative means to build wind turbines, including the tower.

Other references as well as the conventional cranes described above are known in the state of the art related to two types of solution:
- Self-climbing systems (understanding as such structures that are supported and raised throughout the tower);
- Bridge-crane type solutions supported on lattices on the ground.

Among the climbing solutions, patent US6868646B2 is known regarding a method and means for erecting a wind turbine tower.

Said means incorporate two structures: a lower one, whereto a hoist cable is fastened at a point close to the lower part, and an upper one, which supports the bridge crane-type structure. The hoist cable passes through a pulley fastened to a suitable fastening point in the tower close to the upper part of each section and it is wound in a winch located on the ground.

The system goes up and down the tower every time a section is assembled. Then, once it has been assembled on top of the lower sections of the tower, the unit is lowered, another section is fastened and it is hoisted again. The lower structure incorporates a wheel/roller system adapted to cooperate with guides situated in the tower.

The self-climbing structures can be light and have reduced dimensions, as they use as support of the weight of the assembled components the tower (or the part of the tower already assembled).

However, the self-climbing structures by pulleys, jacks or similar require some kind of guiding of the structure over the tower to guarantee that there is no interference with the tower during the lifting of the structure. In the case of a conical tower, a typical design of concrete is used, the guiding system becomes complicated, as it requires a spring-type element to guarantee the compression of wheels or rollers on the tower surface and avoid said interference. Alternatively, the climbing is performed by friction between a mechanism disposed on the structure and the tower. In this case, it is again required that the mechanism is capable of adapting to the tower's conical shape.

Furthermore, the lattice-based structures are large structures that will require a large number of trucks for their transport. They have the advantage, compared with climbing solutions, that they can be used with any type of tower without the need to vary their design, since it is not necessary to provide them with additional fastening points or supports to fasten the climbing structure.

The method of assembling a wind turbine of the present invention solves all the previous drawbacks reducing the costs associated to the assembling of the wind turbine.

### DESCRIPTION OF THE INVENTION

The method of assembling a wind turbine of the present invention relates to a method of assembling a wind turbine, the wind turbine comprising:
- a foundation;
- a tower which in turn comprises a height, at least a first tower section comprising an adapter, and optionally a second tower section; and
- at least one wind turbine component and optionally at least one additional wind turbine component;
wherein the adapter is disposed in the upper part of the first tower section and below the second tower section or disposed in the upper part of the first tower section and below the at least one wind turbine component; and
wherein the method comprises the following steps:
- lifting the first tower section by means of a first lifting structure which is supported on a ground next to the foundation;
- lifting a second lifting structure to a first position located at a first height along the height of the tower;
- fixing the second lifting structure in the first position by attaching the second lifting structure at least to the first tower section;
- lifting the second tower section or the at least one wind turbine component by means of the second lifting structure fixed in the first position; and
- connecting the second tower section or the at least one wind turbine component to the first tower section.

The combination of the two kind of lifting structures, the first lifting structure and the second lifting structure is particularly beneficial for achieving a fast assembly of wind turbines, in particular in big wind farms, where the first lifting structure is supported on the ground and assembles the heaviest parts of the wind turbine (i.e. the segments comprised by the first tower section) that are closer to the ground and subjected to higher loads, and the second lifting structure attached to the first tower section and supported by it is used for the assembly of a lightweight second tower section or at least one wind turbine component which can be part of a subset of wind turbine components.

The first tower section then serves as the supporting structure for the second lifting structure that then bears the loads related to the weight of the second lifting structure and the ones arising during the lifting and assembly of the second tower section and the at least one wind turbine component. This second lifting structure can therefore be a light structure compared to the first one.

In a preferred embodiment, the step of lifting the second lifting structure to the first position located at the first height along the height of the tower is carried out in a single lifting operation, preferably directly from the ground to the first position without any intermediate connections of the second lifting structure to the first tower section. This is differentiating and very advantageous in terms of time (by reducing the number of tower connection operations) and tower cost, as each intermediate connection would increase the cost of the second lifting structure, as local reinforcements and extra material are required in these connection zones. When lifting the second lifting structure to a first position located at a first height along the height of the tower, the first position defines a position from where the second lifting structure can be used to lift and assemble the rest of the sections and/or wind turbine components until the whole wind turbine is assembled.

In a first embodiment, the tower is a "full concrete" tower and the first height is approximately the height of the first tower section and the second lifting structure lifts the rest of wind turbine components located above the first tower section until the whole wind turbine is assembled.

In a second embodiment, the tower is a "concrete-steel hybrid" tower comprising a first tower section comprising at least two concrete segments and further comprising a second tower section made of steel, wherein the first height is approximately the height of the first tower section and the second lifting structure lifts the second tower section and the at least one turbine component being part of a subset of wind turbine components for assembling the whole wind turbine

Preferably, the step of lifting the second tower section or the at least one wind turbine component by means of the second lifting structure fixed in the first position comprises a step of lifting the second tower section by means of the second lifting structure fixed in the first position and a step of lifting the at least one wind turbine component by means of the second lifting structure fixed in the first position.

Additionally to the second embodiment, the method further comprises the following steps:
- fixing the second lifting structure additionally in a second position located at a second height along the height of the tower upper than the first position by attaching the second lifting structure at least to the second tower section;
- lifting the at least one additional wind turbine component by means of the second lifting structure;
- connecting the at least one additional wind turbine component to the second tower section.

In this way the second tower section and the second lifting structure can move together and hence ensure the accuracy of relative movements and positioning manoeuvres during the assembly method.

In the first embodiment, wherein the tower is a "full concrete" tower, the adapter is disposed in the upper part of the first tower section being a concrete tower section, and below the at least one wind turbine component, the at least one wind turbine component being preferably the yaw bearing of the nacelle, and wherein in the step of fixing the second lifting structure in the first position by attaching the second lifting structure at least to the first tower section, the second lifting structure is attached at least to the adapter of the first tower section.

In this same first embodiment, the second lifting structure is in particular configured to lift at least a nacelle module together with the yaw bearing, the main frame and other mechanical components.

Preferably, the step of fixing the second lifting structure additionally in a second position located at a second height along the height of the tower upper than the first position by attaching the second lifting structure at least to the second tower section is carried out before the step of lifting the at least one additional wind turbine component by means of the second lifting structure.

Preferably, the step of fixing the second lifting structure in the first position by attaching the second lifting structure at least to the first tower section, includes attaching the second lifting structure at least to the adapter of the first tower section via a connection provided in the adapter.

Additionally, the step of fixing the second lifting structure in the first position by attaching the second lifting structure at least to the first tower section, includes attaching the second lifting structure to a concrete segment located below the adapter via a further connection provided in the concrete segment, preferably in a region proximate to a horizontal joint between two concrete segments.

In the second embodiment, wherein the tower is a concrete-steel hybrid tower, the first tower section is a concrete tower section which might comprise multiple concrete tower segments, the second tower section is a steel tower section which might comprise multiple steel tower segments, and the first tower section comprises additionally the adapter located on top of its uppermost concrete segment to match the diameter of the upper flange of the concrete segment of the first tower section with the diameter of the lower flange of the second tower section, i.e., the adapter is disposed in the upper part of the first tower section and below the second tower section.

In this embodiment, the step of fixing the second lifting structure in the first position by attaching the second lifting structure at least to the first tower section, the second lifting structure is attached at least to the adapter of the first tower section.

The invention is particularly advantageous for full concrete or hybrid towers, whose diameters can be so large and its concrete segments so heavy that performing the whole assembly of the wind turbine with a self-climbing crane is not efficient in terms of time and material, while a conventional crane supported on the ground might be expensive to reach the targeted heights (above 160m). The self-erecting crane becomes too complex to overcome the problems of the conicity of the tower and requires a heavy structure. With the method of the present invention, the heaviest components belonging to the first tower section are lifted with the first lifting structure supported on the ground while the second lifting structure is configured to erect the lighter ones belonging to the second tower section and additional wind turbine components. This second lifting structure just needs to be lifted once, which increases the speed of the assembly process. Additionally, the number of connection areas in the tower are minimized (vs. other self-erecting or self-climbing options), hence reducing the product cost, as these areas need to be specifically reinforced to be able to stand higher stresses.

Specifically, the first lifting structure is configured to lift components with weights up to approximately 350tn, while the second lifting structure is configured to lift components up to approximately150tn.

Optionally, the step of lifting the second lifting structure to the first position along the height of the tower is carried out by means of the first lifting structure.

Optionally, the step of lifting the second lifting structure to the first position along the height of the tower is carried out by means of an auxiliary lifting structure.

Additionally, the method further comprising the following steps:
- lifting the auxiliary lifting structure, at least partially, to a third position along the height of the tower;
- fixing the auxiliary lifting structure by attaching, at least partially, the auxiliary lifting structure to the first tower section.

Preferably, the step of fixing the auxiliary lifting structure by attaching, at least partially, the auxiliary lifting structure to the first tower section is carried out in the third position after the step of lifting the auxiliary lifting structure, at least partially, to the third position.

Also preferably, the step of fixing the auxiliary lifting structure by attaching the auxiliary lifting structure to the first tower section is carried out before the step of lifting the first tower section.

In any of the embodiments described above, the step of fixing the auxiliary lifting structure by attaching, at least partially, the auxiliary lifting structure to the first tower section, the auxiliary lifting structure can be attached to the adapter of the first tower section.

Preferably, the method further comprises a step of connecting the second tower section to the adapter.

Optionally, wherein the first tower section further comprises at least two concrete sections and a post-tensioning system, the method further comprises a step of post-tensioning the first tower section. Preferably, the step of post-tensioning the first tower section is carried out before the step of fixing the second lifting structure at least to the first tower section in the first position, more preferably, before the step of lifting the second lifting structure to the first position along the height of the tower.

Preferably, the method further comprises a step of dismantling the second lifting structure from the at least the first tower section.

The invention also relates to a method of assembling a wind farm, wherein the wind farm comprises at least two wind turbines, being a first wind turbine assembled carrying out the method of assembling a wind turbine described above and a second wind turbine assembled carrying out the method of assembling a wind turbine described above, wherein the two wind turbines are disposed in two sites, being a first site and a second site of the wind farm, respectively,
wherein the first wind turbine comprises:
   - a foundation;
   - a first tower which in turn comprises a height, at least a first tower section comprising an adapter, and optionally a second tower section; and
   - at least one wind turbine component and optionally at least one additional wind turbine component;
   wherein the adapter is disposed in the upper part of the first tower section and below the second tower section or disposed in the upper part of the first tower section and below the at least one wind turbine component; and
wherein the second wind turbine comprises:
   - a foundation;
   - a second tower which in turn comprises a height, at least a first tower section comprising an adapter and optionally a second tower section; and
   - at least one wind turbine component and optionally at least one additional wind turbine component;
   wherein the adapter is disposed in the upper part of the first tower section and below the second tower section or disposed in the upper part of the first tower section and below the at least one wind turbine component; and
wherein the method further comprises a step of:
   - transporting the first lifting structure from the first site to the second site; and
   - transporting the second lifting structure from the first site to the second site.

In this way, while the second lifting structure is performing the rest of the assembly of the second tower section or wind turbine components located above the first tower section, the first lifting structure is used for the assembly of the first tower section of a second wind turbine in the wind farm, reducing the assembly times.

Optionally, the step of transporting the first lifting structure from the first site to the second site is carried out substantially at the same time that the second lifting structure performs the lifting of the second tower section of the first wind turbine.

Therefore, even if the first lifting structure is in transit from the first site to the second site, the assembly times of the at least two wind turbines are reduced.

Optionally, the step of dismantling the second lifting structure from the at least first tower section of the first tower is carried out substantially at the same time that the step of lifting the first tower section of the second tower by means of the first lifting structure.

The invention also relates to a wind turbine assembly system, wherein the wind turbine comprises:
- a foundation;
- a tower which in turn comprises a height, a first tower section comprising an adapter, and optionally a second tower section, the adapter being disposed between the first tower section and the second tower section; and
- at least one wind turbine component and optionally at least one additional wind turbine component; and
wherein the system comprises:
- a first lifting structure configured to lift the first tower section, wherein the first lifting structure is supported on a ground next to the foundation;
- lifting means configured to lift a second lifting structure to a first position located at a first height along the height of the tower;
- attaching means configured to attach the second lifting structure at least to the first tower section and fix the second lifting structure in the first position;
- the second lifting structure, wherein the second lifting structure fixed in the first position is configured to lift the second tower section or the at least one wind turbine component; and
- connecting means configured to connect the second tower section or the at least one wind turbine component to the first tower section Optionally, the system further comprises:
- attaching means configured to attach the second lifting structure at least to the second tower section;
- wherein the second lifting structure is also configured to lift the at least one additional wind turbine component.

Preferably, the lifting means configured to lift the second lifting structure to the first position along the height of the tower are the first lifting structure.

Also preferably, the system further comprises an auxiliary lifting structure, wherein the lifting means configured to lift the second lifting structure to the first position along the height of the tower are the auxiliary lifting structure.

Optionally, the first lifting structure is also configured to lift the auxiliary lifting structure, at least partially, to a third position along the height of the tower.

Optionally, the system further comprises attaching means configured to attach, at least partially, the auxiliary lifting structure to the first tower section.

Preferably, the attaching means configured to attach the second lifting structure at least to the first tower section and fix the second lifting structure in the first position are attaching means configured to attach the second lifting structure to the adapter.

In the case that the first tower section comprises at least two concrete sections and a post-tensioning system, the system further comprises post-tensioning means configured to post-tension the first tower section.

The invention also relates to a system of assembling a wind farm, wherein the wind farm comprises at least two wind turbines, being a first wind turbine assembled with the system described above and a second wind turbine assembled with the system described above, wherein the two wind turbines are disposed in two sites, being a first site and a second site of the wind farm, respectively,
wherein the first wind turbine comprises:
   - a foundation;
   - a first tower which in turn comprises a height, at least a first tower section comprising an adapter, and optionally a second tower section; and
   - at least one wind turbine component and optionally at least one additional wind turbine component;
   wherein the adapter is disposed in the upper part of the first tower section and below the second tower section or disposed in the upper part of the first tower section and below the at least one wind turbine component; and
wherein the second wind turbine comprises:
   - a foundation;
   - a second tower which in turn comprises a height, at least a first tower section comprising an adapter and optionally a second tower section; and
   - at least one wind turbine component and optionally at least one additional wind turbine component;
   wherein the adapter is disposed in the upper part of the first tower section and below the second tower section or disposed in the upper part of the first tower section and below the at least one wind turbine component; and
wherein the system further comprises:
   - transporting means configured to transport the first lifting structure from the first site to the second site; and
   - transporting means configured to transport the second lifting structure from the first site to the second site.

### DESCRIPTION OF THE DRAWINGS

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

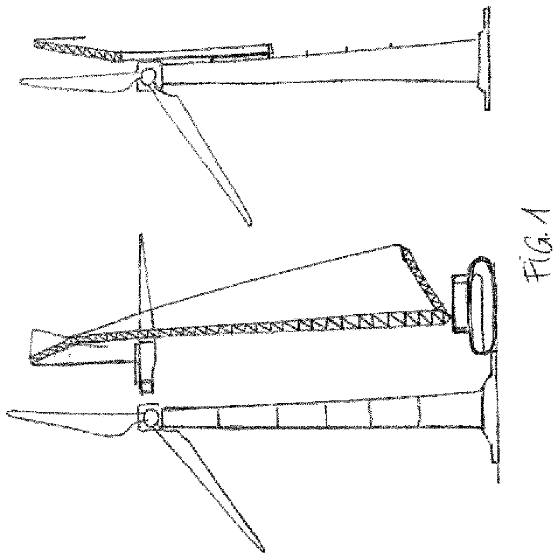

Figure 1 shows a mobile crawler crane used for lifting the wind turbine on the left side and a self-climbing crane used for lifting the wind turbine on the right side according to the state of the art.

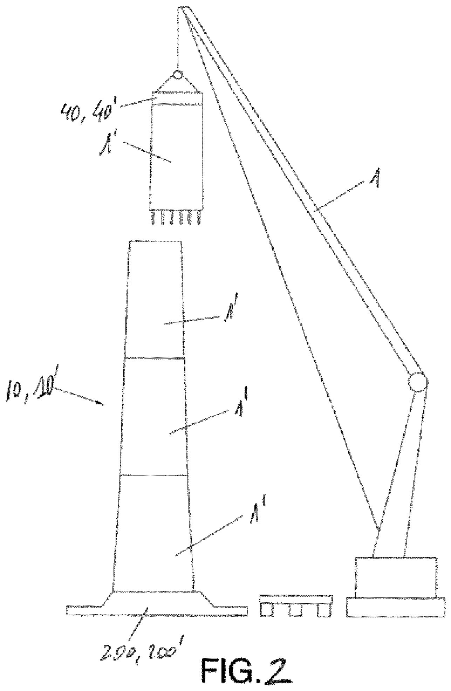

Figure 2 shows the first lifting structure configured to lift the first tower section of the wind turbine assembly system of the present invention.
Figure 3 shows the second lifting structure fixed in the first position and configured to lift the second tower section or the at least one wind turbine component of the wind turbine assembly system of the present invention, carrying out the lifting of the second tower section by means of the second lifting structure fixed in the first position (shown on the left side) and a step of lifting the at least one wind turbine component by means of the second lifting structure fixed in the first position (shown on the right side).
Figure 4 shows the method of assembling a wind farm of the present invention, wherein two wind turbines are shown.
Figures 5 to 8 shows the step of lifting a second lifting structure to a first position located at a first height along the height of the tower.
Figure 9 shows the step of fixing the second lifting structure in the first position by attaching the second lifting structure at least to the first tower section, wherein it is shown the attaching of the second lifting structure to the adapter.
Figure 10 shows the step of fixing the second lifting structure in the first position by attaching the second lifting structure at least to the first tower section, wherein it is shown the attaching of the second lifting structure to a concrete segment of the first tower section.
Figure 11 shows the first lifting structure configured to lift the first tower section wherein the second lifting structure of the wind turbine assembly system described in the preferred embodiment is to be attached.
Figure 12 shows a perspective view of the second lifting structure of the wind turbine assembly system to be lifted with the lifting system described in the preferred embodiment.
Figure 13 shows a detail A of Figure 12.
Figure 14 shows a detail B of Figure 12.
Figure 15 shows a perspective view of the first auxiliary lifting structure of the lifting means disposed on the adapter of the first tower section.
Figure 16 shows a perspective view of the holes disposed on lug nuts disposed between two concrete segments of the first tower section, acting as positioning means.

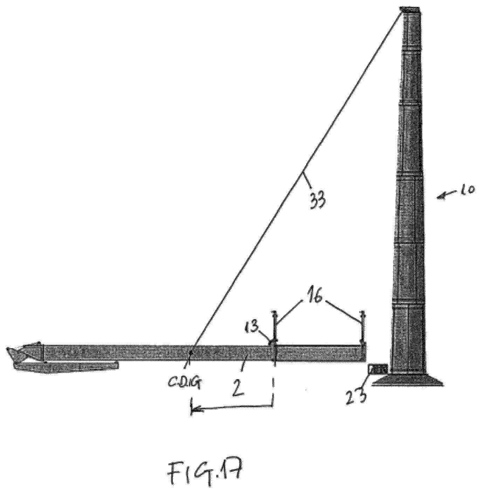

Figure 17 shows a front view of the step of displacing the second auxiliary lifting structure on the second lifting structure towards the centre of gravity of the second lifting structure being in a substantially horizontal position, of the lifting method described in the preferred embodiment.

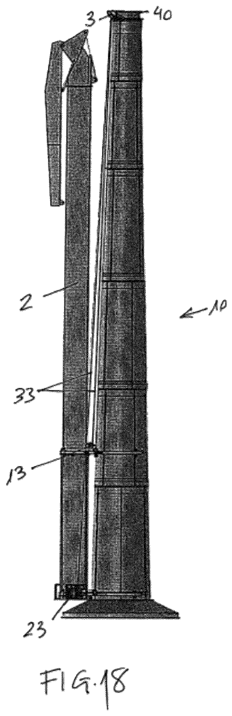

Figure 18 shows a front view once carried out the step of erecting the second lifting structure from the substantially horizontal position to a substantially vertical position on the ground next to the first tower section by means of the lifting means, of the lifting method described in the preferred embodiment.

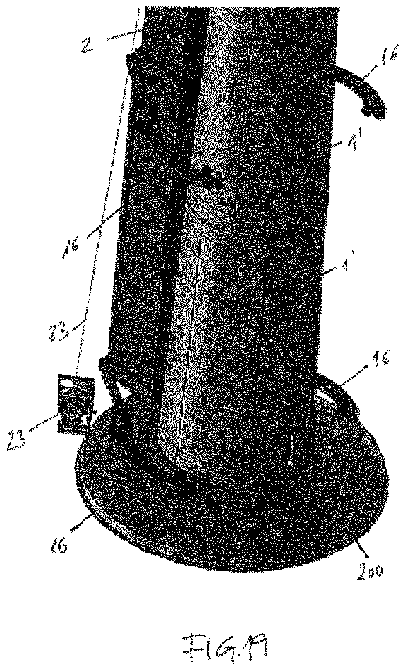

Figure 19 shows a perspective view of the Figure 18.
Figure 20 shows a front view at the beginning of the step of embracing the first tower section along the lifting of the second lifting structure till the first position by means of the second lifting structure, of the lifting method described in the preferred embodiment.
Figure 21 shows a front view of the step of attaching the second lifting structure at least to the first tower section and fix the second lifting structure in the first position, after the step of positioning the second lifting structure with the first tower section in the first position in a substantially vertical direction, of the lifting method described in the preferred embodiment.

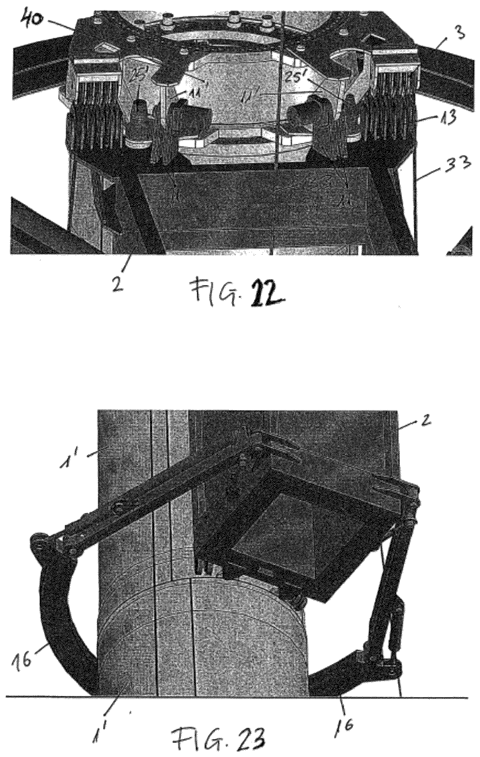

Figure 22 shows a top perspective view of the Figure 21.
Figure 23 shows a bottom perspective view of Figure 21.

### DETAILED DESCRIPTION OF THE INVENTION

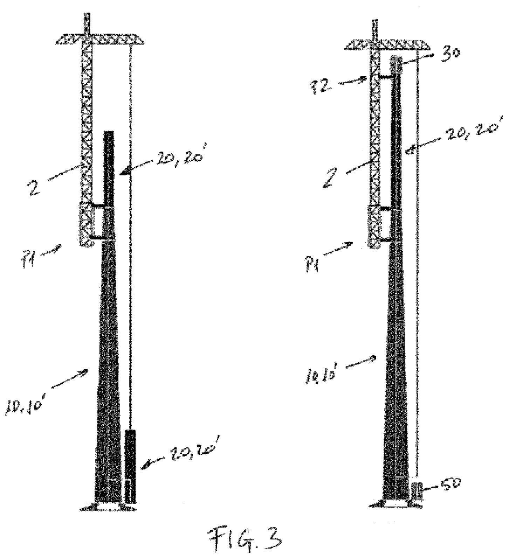

The following is a detailed description of the method of assembling a wind turbine of the present invention, the wind turbine comprising:
- a foundation (200);
- a tower (100) which in turn comprises a height, at least a first tower section (10) comprising an adapter (40), and optionally a second tower section (20); and
- at least one wind turbine component (30) and optionally at least one additional wind turbine component (50);
wherein the adapter (40) is disposed in the upper part of the first tower section and below the second tower section (20) or disposed in the upper part of the first tower section (10) and below the at least one wind turbine component (30); and
wherein the method comprises a step of:
   - lifting the first tower section (10) by means of a first lifting structure (1) which is supported on a ground next to the foundation (200);
wherein the method further comprises the following steps:
   - lifting a second lifting structure (2) to a first position (P1) located at a first height (H1) along the height of the tower (100);
   - fixing the second lifting structure (2) in the first position (P1) by attaching the second lifting structure (2) at least to the first tower section (10);
   - lifting the second tower section (20) or the at least one wind turbine component (30) by means of the second lifting structure (2) fixed in the first position (P1); and;
   - connecting the second tower section (20) or the at least one wind turbine component (30) to the first tower section (10).
As can be seen in Figure 3, the method further comprises the following steps:
- fixing the second lifting structure (2) additionally in a second position (P2) located a at second height (H2) along the height of the tower (100) upper than the first position (P1) by attaching the second lifting structure (2) at least to the second tower section (20);
- lifting the at least one additional wind turbine component (50) by means of the second lifting structure (2);
- connecting the at least one additional wind turbine component (50) to the second tower section (20).

In a preferred embodiment, the step of lifting the second lifting structure (2) to the first position (P1) located at the first height (H1) along the height of the tower (100) is carried out in a single lifting operation and the step of lifting the second tower section (20) or the at least one wind turbine component (30) by means of the second lifting structure (2) fixed in the first position (P1) comprises a step of lifting the second tower section (20) by means of the second lifting structure (2) fixed in the first position (P1) and a step of lifting the at least one wind turbine component (30) by means of the second lifting structure (2) fixed in the first position (P1).

In this preferred embodiment, the step of lifting the second lifting structure (2) to the first position (P1) along the height of the tower (100) is carried out by means of an auxiliary lifting structure (3), wherein the method further comprises the following steps:
- lifting the auxiliary lifting structure (3), at least partially, to a third position (P3) located a at third height (H3) along the height of the tower (100);
- fixing the auxiliary lifting structure (3) by attaching, at least partially, the auxiliary lifting structure (3) to the first tower section (10);
wherein the step of fixing the auxiliary lifting structure (3) by attaching the auxiliary lifting structure (3), at least partially, to the first tower section (10) is carried out before the step of lifting the first tower section (10).

In this way, the auxiliary lifting structure (3) is attached, at least partially, to the first tower section (10) on the ground, before the step of lifting the first tower section (10) together with the auxiliary lifting structure (3) attached to the adapter (40) of the first tower section (10) by means of a first lifting structure (1).

In a preferred embodiment wherein the first tower section (10) further comprises at least two concrete segments (1') and a post-tensioning system, the method may comprise a step of post-tensioning the first tower section (10) before the step of lifting the second lifting structure (2) to the first position (P1) along the height of the tower (100).

Once the wind turbine has been assembled, the method further comprises a step of dismantling the second lifting structure (2) from the at least the first tower section (10). Preferably, the step of dismantling the second lifting structure (2) from the at least the first tower section (10) is performed by means of the auxiliary lifting structure (3).

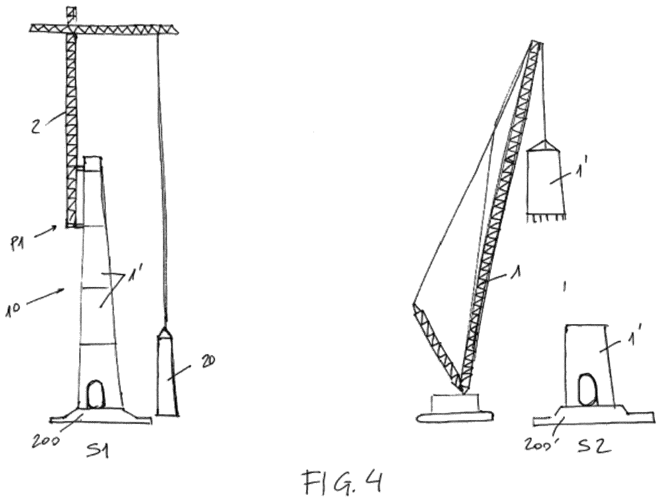

Figure 4 shows the method of assembling a wind farm, wherein the wind farm comprises at least two wind turbines, being a first wind turbine assembled carrying out the method described above and a second wind turbine assembled carrying out the method described above, wherein the two wind turbines are disposed in two sites, being a first site (S1) and a second site (S2) of the wind farm, respectively. The step of transporting the first lifting structure (1) from the first site (S1) to the second site (S2), since the first lifting structure (1) has carried out the lifting of the first tower section (10) of the first wind turbine, can be carried out from the first site (S1) to the second site (S2) substantially at the same time that the second lifting structure (2) performs the lifting of the second tower section (20) of the first wind turbine. Afterwards, the transporting means (not shown) will carry out the transporting of the second lifting structure (2) from the first site (S1) to the second site (S2), once the second lifting structure (2) has been dismantled from the first wind turbine.

The invention also relates to a wind turbine assembly system for the assembly of a wind turbine, wherein the system comprises:
- a first lifting structure (1) configured to lift the first tower section (10), wherein the first lifting structure is supported on a ground next to the foundation (200);
- lifting means (1, 3) configured to lift a second lifting structure (2) to a first position (P1) located at a first height (H1) along the height of the tower (100), wherein this lifting means are preferably an auxiliary lifting structure (3) of the system;

- attaching means (11) configured to attach the second lifting structure (2) at least to the first tower section (10) and fix the second lifting structure (2) in the first position (P1);
- the second lifting structure (2), wherein the second lifting structure (2) fixed in the first position (P1) is configured to lift the second tower section (20) or the at least one wind turbine component (30); and
- connecting means configured to connect the second tower section (20) or
the at least one wind turbine component (30) to the first tower section (10). In the embodiment shown in Figure 3, the auxiliary lifting structure (3) is used to lift the second lifting structure (2) which, fixed in the first position (P1), is used for erecting the second tower section (20) and at least an additional wind turbine component (50), in particular a nacelle, a hub and the blades (not shown).
In an alternative embodiment (not shown), the lifting means are configured to lift the second lifting structure (2) to a second position (P2) along the height of the tower (100) upper than the first position (P1); and the system further comprises:
- attaching means (11') configured to attach the second lifting structure (2) at least to the second tower section (20) and fix the second lifting structure in the second position (P2);
- wherein the second lifting structure (2) fixed in the second position (P2) is also configured to lift the at least one additional wind turbine component (50).

Preferably, the auxiliary lifting structure (3) is lifted to a third position (P3) along the height of the tower (100) by means of the first lifting structure (1), whereas the system further comprises attaching means configured to attach the auxiliary lifting structure (3) to the first tower section (1), preferably before the lifting to the third position (P3).

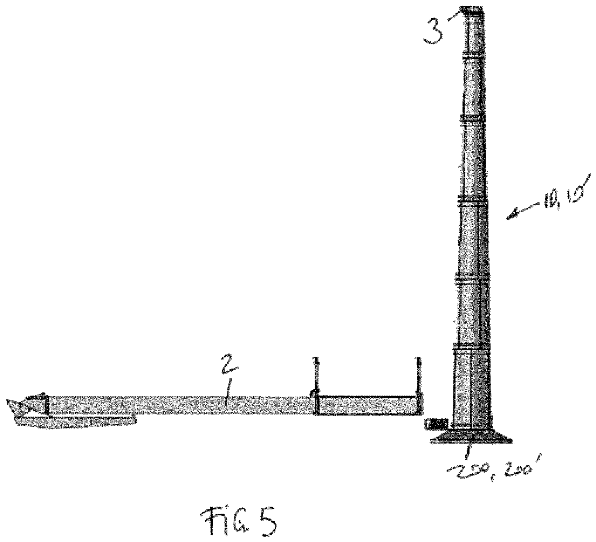

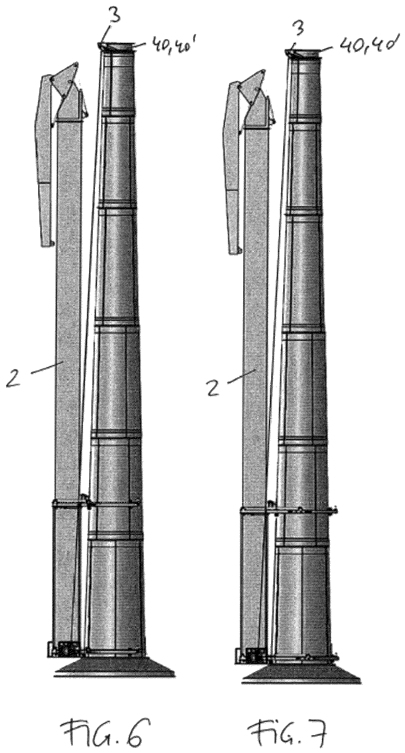

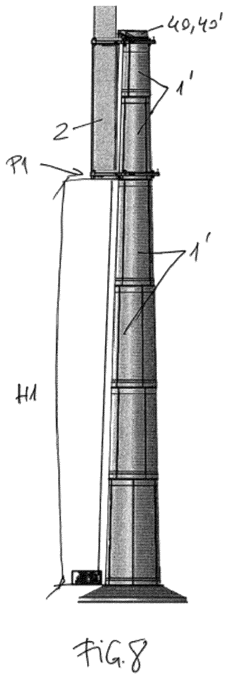

Figures 5 to 8 shows the step of lifting a second lifting structure to a first
position located at a first height along the height of the tower.

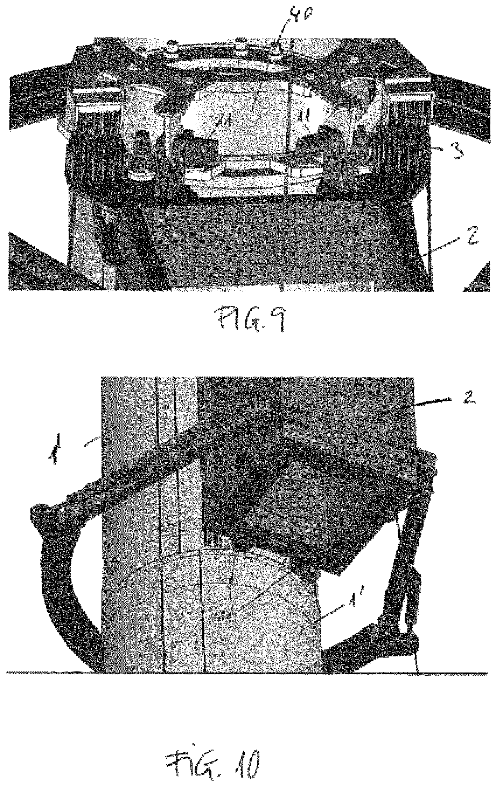

Figures 9 and 10 show the attaching means (11) configured to attach the second lifting structure (2) at least to the first tower section (10) and fix the second lifting structure in the first position (P1) and attach the second lifting structure (2) to the adapter (40).

### EXAMPLE OF LIFTING SYSTEM FOR A WIND TURBINE ASSEMBLY SYSTEM AND RELATED LIFTING METHOD

The following is a detailed description of the lifting system for wind turbine assembly system of the present invention, wherein the wind turbine comprises:
- a foundation (200);
- a tower (100) which in turn comprises a height, at least a first tower section (10) comprising an adapter (40), and optionally a second tower section (20); and
- at least one wind turbine component (30) and optionally at least one additional wind turbine component (50);
wherein the adapter (40) is disposed in the upper part of the first tower section and below the second tower section (20) or disposed in the upper part of the first tower section (10) and below the at least one wind turbine component (30); and
wherein the wind turbine assembly system comprises:
   - a first lifting structure (1) configured to lift the first tower section (10), wherein the first lifting structure (1) is supported on a ground next to the foundation;
   - lifting means (3, 13, 23, 33) configured to lift a second lifting structure (2) to a first position (P1) located at a first height (H1) along the height of the tower (100);
   - attaching means (11, 11', 12, 12', 13) configured to attach the second lifting structure (2) at least to the first tower section (10) and fix the second lifting structure (2) in the first position (P1);
   - the second lifting structure (2), wherein the second lifting structure (2) is configured to lift the second tower section (20) or the at least one wind turbine component (30) fixed in the first position (P1); and
wherein the lifting system comprises:
   - the lifting means (3, 13, 23, 33) configured to lift the second lifting structure (2) to the first position (P1) located at the first height (H1) along the height of the tower (100);
   - guiding means (14) configured to guide the second lifting structure (2) along the first tower section (10);
   - the attaching means (11, 11', 12, 12', 13) configured to attach the second lifting structure (2) at least to the first tower section (10) and fix the second lifting structure (2) in the first position (P1).

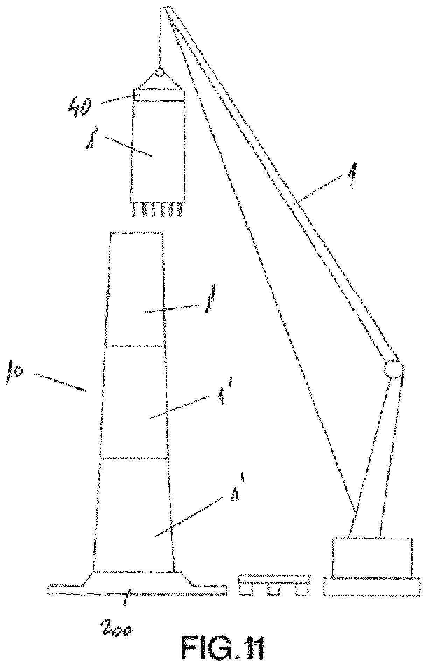

As can be seen in Figure 11, a first lifting structure (1) is configured to lift the first tower section (10), wherein the first lifting structure (1) is supported on a ground next to the foundation. This first tower section (10) defines the first position (P1) located at a first height (H1) along the height of the tower (100) wherein the second lifting structure (2) is lifted. From this first position (P1), the second lifting structure (2) is configured to lift the second tower section (20) or the at least one wind turbine component (30).

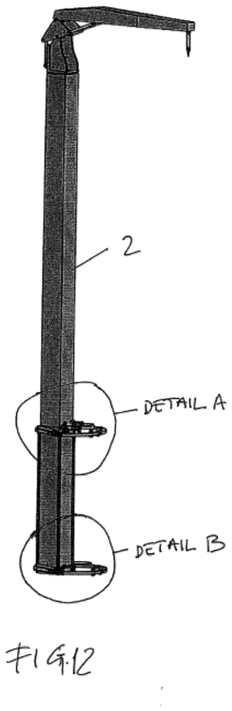

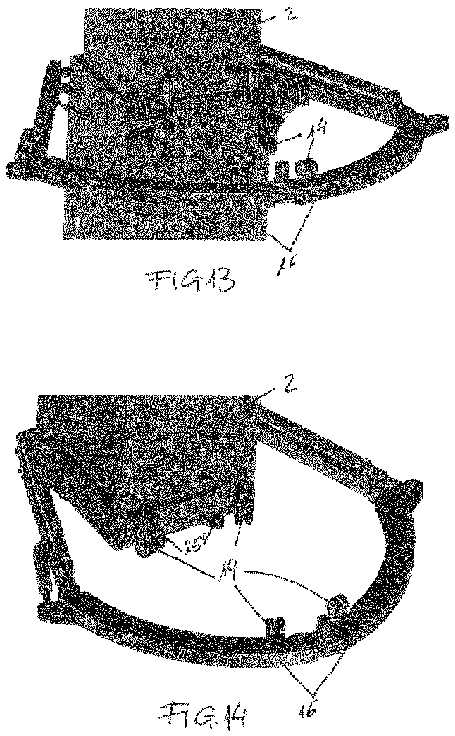

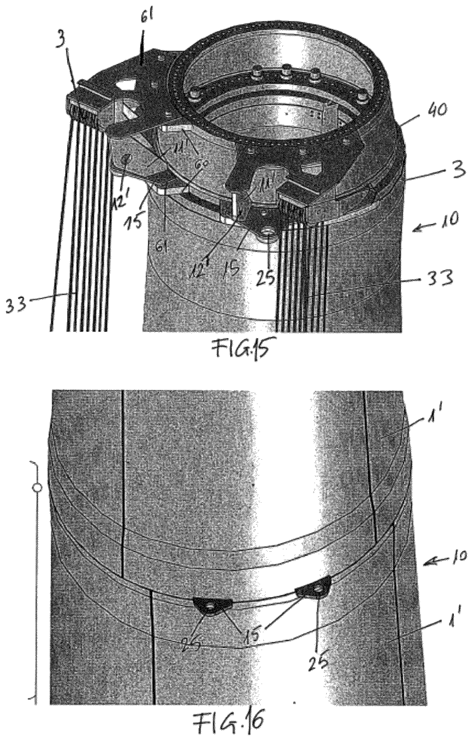

As can be seen in Figures 12 to 14, the second lifting structure (2) comprises:
- a second auxiliary lifting structure (13) of the lifting means (3, 13, 23, 33) (the first auxiliary lifting structure (3) of the lifting means will be described in detail below),
- steerable guiding means (14) configured to guide the second lifting structure (2) along the first tower section (10),
- attaching means (11, 12) configured to attach the second lifting structure (2) at least to the first tower section (10) and fix the second lifting structure (2) in the first position (P1), the attaching means being vertical lug nuts (11) comprising holes (12),
- positioning means (25') being bolts (25') configured to centre the second lifting structure (2) with the first tower section (10) in the first position (P1), since the bolts (25') (shown in Figure 13 and being next to or on the second auxiliary lifting structure (13)) are antagonist to holes (25) disposed on horizontal lug nuts (15) of the adapter (40) (shown in Figure 15) of the first tower section (10) and the bolts (25') (shown in Figure 14) are antagonist to holes (25) disposed on horizontal lug nuts (15) disposed along the first tower section (10) (shown in Figure 16), preferably between two concrete segments (1'), and
- wherein the guiding means (14) configured to guide the second lifting structure (2) along the first tower section (10) comprise adjustable embracing means (16) configured to embrace the first tower section (10) along the lifting of the second lifting structure (2) till the first position (1), preferably by means of hydraulic means.

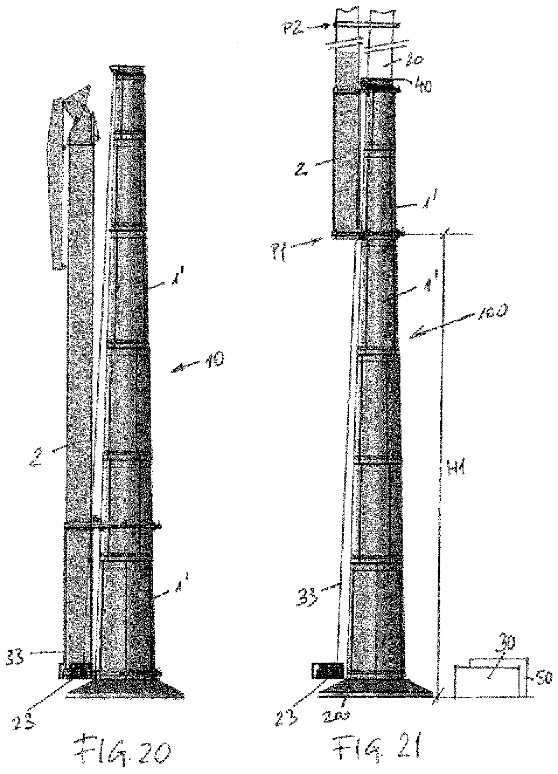

Optionally, the attaching means (11, 11', 12, 12', 13) configured to attach the second lifting structure (2) at least to the first tower section (10) and fix the second lifting structure (2) in the first position (P1) are configured to attach the second lifting structure (2) at least to the first tower section (10) between two concrete segments (1') of the first tower section (10) and fix the second lifting structure (2) in the first position (P1) as shown in Figure 21.

In particular, the attaching means (11, 11', 12, 12', 13) configured to attach the second lifting structure (2) at least to the first tower section (10) and fix the second lifting structure (2) in the first position (P1) are further configured to attach the second lifting structure (2) at least to the first tower section (10) between two concrete segments (1') of the first tower section (10), so that there is a second attachment location along the height of the first tower section (10), one attachment point to the adapter (40) and another attachment point in a location lower than the adapter (40) between two concrete segments (1') for further stability of the second lifting structure (2).

Optionally, the system further comprises attaching means configured to attach the second lifting structure (2) at least to the second tower section (20), in particular to an upper end of the second tower section (20).

Alternatively, the attaching means configured to attach the second lifting structure at least to the first tower section and fix the second lifting structure in the first position are also configured to attach the second lifting structure at least to the second tower section and fix the second lifting structure additionally in a second position located at a second height along the height of the tower upper than the first position.
The first auxiliary lifting structure (3) of the lifting means (3, 13, 23, 33) is disposed on the adapter (40) of the first tower section (10) in this embodiment, wherein the adapter (40) further comprises;
- attaching means (11', 12') configured to attach the second lifting structure (2) at least to the first tower section (10) and fix the second lifting structure (2) in the first position (P1), the attaching means being vertical lug nuts (11') comprising holes (12') parallel to the vertical lug nuts (11) comprising holes (12) disposed on the second lifting structure (2). In the first position (P1), the holes (12') of the vertical lug nuts (11') of the adapter (40) are coincident with the holes (12) of the vertical lug nuts (11) of the second lifting structure (2). Thus, bolts (17) passing through the holes (12, 12') attach the second lifting structure (2) at least to the first tower section (10) and fix the second lifting structure (2) in the first position (P1);
- positioning means (25) being holes (25) configured to centre the second lifting structure (2) with the first tower section (10) in the first position (P1), as explained above for the second lifting structure (2).

Preferably, the adapter is configured to detachably connect the first auxiliary lifting structure (3) of the lifting means (3, 13, 23, 33), the attaching means (11', 12') and the positioning means (25) described in the last paragraph to it.

In this embodiment, the first auxiliary lifting structure (3) comprises two cargo blocks (3) disposed symmetrically with regard to the axis of the first tower section (10) being fixed to the adapter (40) in symmetrical lugs (60) disposed radially on the adapter (40) by means of platens (61). The adapter (40) is further configured to detachably connect the attaching means (11', 12'), preferably a horizontal hole, disposed between the platens (61), and the positioning means (25), preferably vertical holes, also disposed on the platens (61).

It is also disclosed here the wind turbine comprising a tower which in turn comprises a height, at least a first tower section (10) comprising the adapter (40) as described above, optionally a second tower section (20),
wherein the adapter (40) is disposed in the upper part of the first tower section and below the second tower section (20) or disposed in the upper part of the first tower section (10) and below the at least one wind turbine component (30).

The tower comprises in an embodiment at least one attachment point for the second lifting structure provided in the adapter, more particularly a second attachment point in a location lower than the adapter between two concrete segments for further stability of the second lifting structure so that the attachment points are configured to cooperate with the attaching means of the second lifting structure. Optionally, the tower further comprises a third attachment point for the second lifting structure configured to cooperate with the attaching means to attach the second lifting structure at least to the second tower section (in particular in an upper end of the second tower section). In this way, the second lifting structure is fixed in the first position but there is a further attachment point to the upper end of the second tower section so that the uppermost movements of the second lifting structure are similar to the movements of the upper end of the second tower section.

A third auxiliary lifting structure (23) is disposed on the ground or in a substructure disposed on the ground, wherein the third auxiliary lifting structure (23) comprises a winch (23) configured to pull in hoisting means (33), preferably being mooring ropes, to lift the second lifting structure (2) along the first tower section (10) till the first position (P1).

Thus, the lifting means (3, 13, 23, 33) configured to lift the second lifting structure (2) to the first position (P1) along the height of the tower (100) comprise the first auxiliary lifting structure (3) disposed on the adapter (40) of the first tower section (10), the second auxiliary lifting structure (13) disposed on the second lifting structure (2), the third auxiliary lifting structure (23) disposed on the ground or in a substructure disposed on the ground, and hoisting means (33) configured to connect the first (3), the second (13) and the third (23) auxiliary lifting structures.

The invention also relates to a lifting method for the wind turbine assembly system, wherein the lifting method comprises the following steps:
- a step of lifting the second lifting structure (2) to the first position (P1) located at the first height (H1) along the height of the tower (100) by means of the lifting means (3, 13, 23, 33), preferably by pulling in the hoisting means (33) by means of the third auxiliary structure (23), wherein the step of lifting in turn comprises the following steps:
   - a step of positioning the lifting means (3, 13, 23, 33) disposing a first auxiliary lifting structure (3) on the adapter (40) of the first tower section (10), a second auxiliary lifting structure (13) on the second lifting structure (2) and a third auxiliary lifting structure (23) on the ground or in a substructure disposed on the ground, and connecting the first (3), the second (13) and the third (23) auxiliary lifting structures by means of hoisting means (33);
   - a step of displacing the second auxiliary lifting structure (13) on the second lifting structure (2) towards the centre of gravity (C.D.G) of the second lifting structure (2) being in a substantially horizontal position;
   - a step of erecting the second lifting structure (2) from the substantially horizontal position to a substantially vertical position on the ground next to the first tower section (10) by means of the lifting means (3, 13, 23, 33);
   - a step of displacing the second auxiliary lifting structure (13) on the second lifting structure (2) towards a lifting position;
   - a step of positioning the second lifting structure (2) with the first tower section (10) in the first position (P1) in a substantially vertical direction.
- a step of guiding the second lifting structure (2) along the first tower section (10) during the step of lifting the second lifting structure (2) to the first position (P1) which in turn comprises a step of embracing the first tower section (10) along the lifting of the second lifting structure (2) till the first position (P1) by means of the second lifting structure (2); and
- a step of attaching the second lifting structure (2) at least to the first tower section (10) and fix the second lifting structure (2) in the first position (P1).

Preferably, in the step of embracing the first tower section (10) along the lifting of the second lifting structure (2) till the first position (P1) by means of the second lifting structure (2), the second lifting structure (2) is adjusted according to the diameter of the section of the first tower section (10) wherein the second lifting structure (2) is disposed.

Once the wind turbine is erected the method further comprises a step of descending the second lifting structure (2) from the first position (P1) located at the first height (H1) along the height of the tower (100) to the ground by means of the lifting means (3, 13, 23, 33).

## Claims

**1.** Method of assembling a wind turbine, the wind turbine comprising:
- a foundation (200);
- a tower (100) which in turn comprises a height, at least a first tower section (10) comprising an adapter (40), and optionally a second tower section (20); and
- at least one wind turbine component (30) and optionally at least one additional wind turbine component (50);
wherein the adapter (40) is disposed in the upper part of the first tower section and below the second tower section (20) or disposed in the upper part of the first tower section (10) and below the at least one wind turbine component (30); and
wherein the method comprises a step of:
- lifting the first tower section (10) by means of a first lifting structure (1) which is supported on a ground next to the foundation (200);
**characterised in that** the method further comprises the following steps:
- lifting a second lifting structure (2) to a first position (P1) located at a first height (H1) along the height of the tower (100);
- fixing the second lifting structure (2) in the first position (P1) by attaching the second lifting structure (2) at least to the first tower section (10);
- lifting the second tower section (20) or the at least one wind turbine component (30) by means of the second lifting structure (2) fixed in the first position (P1); and;
- connecting the second tower section (20) or the at least one wind turbine component (30) to the first tower section (10).

**2.** The method of claim 1, wherein the step of lifting the second lifting structure (2) to the first position (P1) located at the first height (H1) along the height of the tower (100) is carried out in a single lifting operation.

**3.** The method of any of the previous claims wherein the step of lifting the second tower section (20) or the at least one wind turbine component (30) by means of the second lifting structure (2) fixed in the first position (P1) comprises a step of lifting the second tower section (20) by means of the second lifting structure (2) fixed in the first position (P1) and a step of lifting the at least one wind turbine component (30) by means of the second lifting structure (2) fixed in the first position (P1).

**4.** The method of any of the previous claims, further comprising the following steps:
- fixing the second lifting structure (2) additionally in a second position (P2) located at a second height (H2) along the height of the tower (100) upper than the first position (P1) by attaching the second lifting structure (2) at least to the second tower section (20);
- lifting the at least one additional wind turbine component (50) by means of the second lifting structure (2);
- connecting the at least one additional wind turbine component (50) to the second tower section (20).

**5.** The method of claim 4, wherein the step of fixing the second lifting structure (2) additionally in a second position (P2) located at a second height (H2) along the height of the tower (100) upper than the first position (P1) by attaching the second lifting structure (2) at least to the second tower section (20) is carried out before the step of lifting the at least one additional wind turbine component (50) by means of the second lifting structure (2).

**6.** The method of any of the previous claims, wherein the step of lifting the second lifting structure (2) to the first position (P1) along the height of the tower (100) is carried out by means of the first lifting structure (1).

**7.** The method of any of the previous claims, wherein the step of lifting the second lifting structure (2) to the first position (P1) along the height of the tower is carried out by means of an auxiliary lifting structure (3).

**8.** The method of claim 7 further comprising the following steps:
- lifting the auxiliary lifting structure (3), at least partially, to a third position (P3) located a at third height (H3) along the height of the tower (100);
- fixing the auxiliary lifting structure (3) by attaching the auxiliary lifting structure (3), at least partially, to the first tower section (10).

**9.** The method of claim 8, wherein the step of fixing the auxiliary lifting structure (3) by attaching the auxiliary lifting structure (3), at least partially, to the first tower section (10) is carried out in the third position (P3) after the step of lifting the auxiliary lifting structure (3), at least partially, to the third position (P3).

**10.** The method of claim 8, wherein the step of fixing the auxiliary lifting structure (3) by attaching the auxiliary lifting structure (3), at least partially, to the first tower section (10) is carried out before the step of lifting the first tower section (10).

**11.** The method of any of the claims 8 to 10, wherein in the step of fixing the auxiliary lifting structure (3) by attaching the auxiliary lifting structure (3), at least partially, to the first tower section (10), the auxiliary lifting structure (3) is attached to the adapter (40) of the first tower section (10).

**12.** The method of any of the previous claims, wherein the step of fixing the second lifting structure (2) at least to the first tower section (10) in the first position (P1) further comprises attaching the second lifting structure (2) to the adapter (40).

**13.** The method of claim 12 further comprising a step of connecting the second tower section (20) to the adapter (40).

**14.** The method of any of the previous claims, wherein the first tower section (10) further comprises at least two concrete segments (1') and a post-tensioning system, wherein the method further comprises a step of post-tensioning the first tower section (10).

**15.** The method of claim 14, wherein the step of post-tensioning the first tower section (10) is carried out before the step of fixing the second lifting structure (2) at least to the first tower section (10) in the first position (P1).

**16.** The method of claim 15, wherein the step of post-tensioning the first tower section (10) is carried out before the step of lifting the second lifting structure (2) to the first position (P1) along the height of the tower (100).

**17.** The method of any of the previous claims further comprising a step of:
- dismantling the second lifting structure (2) from the at least the first tower section (10).

**18.** Method of assembling a wind farm, wherein the wind farm comprises at least two wind turbines, being a first wind turbine assembled carrying out the method of any of the previous claims and a second wind turbine assembled carrying out the method of any of previous claims, wherein the two wind turbines are disposed in two sites, being a first site (S1) and a second site (S2) of the wind farm, respectively, wherein the first wind turbine comprises:
- a foundation (200);
- a first tower (100) which in turn comprises a height, at least a first tower section (10) comprising an adapter (40), and optionally a second tower section (20); and
- at least one wind turbine component (30) and optionally at least one additional wind turbine component (50);
wherein the adapter (40) is disposed in the upper part of the first tower section and below the second tower section (20) or disposed in the upper part of the first tower section (10) and below the at least one wind turbine component (30); and
wherein the second wind turbine comprises:
- a foundation (200');
- a second tower (100') which in turn comprises a height, at least a first tower section (10') comprising an adapter (40') and optionally a second tower section (20'); and
- at least one wind turbine component (30') and optionally at least one additional wind turbine component (50');
wherein the adapter (40') is disposed in the upper part of the first tower section and below the second tower section (20') or disposed in the upper part of the first tower section (10') and below the at least one wind turbine component (30'); and
wherein the method further comprises a step of:
- transporting the first lifting structure (1) from the first site (S1) to the second site and
- transporting the second lifting structure (2) from the first site (S1) to the second site (S2).

**19.** The method of claim 18 wherein the step of transporting the first lifting structure (1) from the first site (S1) to the second site (S2) is carried out substantially at the same time that the second lifting structure (2) performs the lifting of the second tower section (20) of the first wind turbine.

**20.** The method of any of the claims 18 or 19 wherein the step of dismantling the second lifting structure (1) from the at least first tower section (10) of the first tower is carried out substantially at the same time that the step of lifting the first tower section (10') of the second tower by means of the first lifting structure (1).

**21.** Wind turbine assembly system, wherein the wind turbine comprises:
- a foundation (200);
- a tower (100) which in turn comprises a height, a first tower section (10) comprising an adapter (40), and optionally a second tower section (20); and
- at least one wind turbine component (30) and optionally at least one additional wind turbine component (50);
wherein the adapter (40) is disposed in the upper part of the first tower section and below the second tower section (20) or disposed in the upper part of the first tower section (10) and below the at least one wind turbine component (30); and
wherein the system comprises:
- a first lifting structure (1) configured to lift the first tower section (10), wherein the first lifting structure (1) is supported on a ground next to the foundation (200);
**characterised in that** the system further comprises:
- lifting means (1, 3) configured to lift a second lifting structure (2) to a first position (P1) located at a first height (H1) along the height of the tower (100);
- attaching means (11) configured to attach the second lifting structure (2) at least to the first tower section (10) and fix the second lifting structure (2) in the first position (P1);
- the second lifting structure (2), wherein the second lifting structure (2) fixed in the first position (P1) is configured to lift the second tower section (20) or the at least one wind turbine component (30); and
- connecting means configured to connect the second tower section (20) or the at least one wind turbine component (30) to the first tower section (10).

**22.** The system of claim 21 further comprising:
- attaching means (11') configured to attach the second lifting structure (2) at least to the second tower section (20);
- wherein the second lifting structure (2) is also configured to lift the at least one additional wind turbine component (50).

**23.** The system of any of the claims 21 to 22, wherein the lifting means (1) configured to lift the second lifting structure (2) to the first position (P1) along the height of the tower (100) are the first lifting structure (1).

**24.** The system of any of the claims 21 to 22, further comprising an auxiliary lifting structure (3), wherein the lifting means (3) configured to lift the second lifting structure (2) to the first position (P1) along the height of the tower (100) are the auxiliary lifting structure (3).

**25.** The system of claim 23 wherein the first lifting structure (1) is also configured to lift the auxiliary lifting structure (3) to a third position (P3) along the height of the tower (100).

**26.** The system of any of claims 24 or 25 further comprising attaching means configured to attach the auxiliary lifting structure (3) to the first tower section (1).

**27.** The system of any of claims 21 to 26, wherein the attaching means (11) configured to attach the second lifting structure (2) at least to the first tower section (10) and fix the second lifting structure in the first position (P1) are attaching means (11) configured to attach the second lifting structure (2) to the adapter (40).

**28.** The system of any of the claims 21 to 27, wherein the first tower section (10) further comprises at least two concrete segments (1') and a post-tensioning system, and wherein the system further comprises post-tensioning means configured to post-tension the first tower section (10).

**27.** System of assembling a wind farm, wherein the wind farm comprises at least two wind turbines, being a first wind turbine assembled with the system of any of the claims 19 to 26 and a second wind turbine assembled with the system of any of the claims 19 to 26, wherein the two wind turbines are disposed in two sites, being a first site (S1) and a second site (S2) of the wind farm, respectively,
wherein the first wind turbine comprises:
- a foundation (200);
- a first tower (100) which in turn comprises a height, at least a first tower section (10) comprising an adapter (40), and a optionally second tower section (20); and
- at least one wind turbine component (30) and optionally at least one additional wind turbine component (50);
wherein the adapter (40) is disposed in the upper part of the first tower section and below the second tower section (20) or disposed in the upper part of the first tower section (10) and below the at least one wind turbine component (30); and
wherein the second wind turbine comprises:
- a foundation (200');
- a second tower (100') which in turn comprises a height, at least a first tower section (10') comprising an adapter (40') and optionally a second tower section (20'); and
- at least one wind turbine component (30') and optionally at least one additional wind turbine component (50');
wherein the adapter (40') is disposed in the upper part of the first tower section and below the second tower section (20') or disposed in the upper part of the first tower section (10') and below the at least one wind turbine component (30'); and
wherein the system further comprises:
- transporting means configured to transport the first lifting structure (1) from the first site (S1) to the second site (S2); and
- transporting means configured to transport the second lifting structure (2) from the first site (S1) to the second site (S2).
